# EUROPEAN PATENT APPLICATION

(11) **EP 2 955 670 A1**
(43) Date of publication of application: **16.12.2015**
(21) Application number: 14177062.8
(22) Date of filing: 15.07.2014
(51) Int. Cl.: G06Q 10/06

(54) **Real-time interactive mobile device for on-site investigation**

(30) Priority: 12.06.2014 TW 103120323
(71) Applicant: Environmental Protection Administration, R.O.C.(Taiwan), Taipei City 10042 (TW)
(72) Inventor: Tsai, Hung-Teh, Taipei City 10042 (TW); Yang, Kai-Hsing, Taipei City 10042 (TW); Chen, Shen-De, Taipei City 11083 (TW); Kuan, Yung-Kai, Taipei 10694 (TW); Sun, Tung-Ching, Taipei City 10042 (TW)
(74) Representative: Gee, Steven William

(57) **Abstract**

A mobile device for site investigation in real time interaction includes: a digital map display module, a remote data access module, a digital map marking module and a data input module. The digital map display module displays a digital map on a monitor of the mobile device. The remote data access module downloads a vicinity data of a surveyed site from a remote server. The digital map marking module marks a coverage region or a sampling distribution record based on the vicinity data. Further, the data input module displays an editing interface on the monitor of the mobile device for editing the coverage region or the sampling distribution record on the digital map by a user. The remote data access module uploads the edited coverage region or sampling distribution record to the remote server.

## Description

### CROSS-REFERENCES TO RELATED APPLICATIONS

This application claims the priority of Taiwanese patent application No. 103120323, filed on June 12, 2014, which is incorporated herewith by reference.

### BACKGROUND OF THE INVENTION

### FIELD OF THE INVENTION

The present invention relates to a mobile device and method for site investigation, and in particular to a mobile device and method for site investigation in real time interaction.

### DESCRIPTION OF THE PRIOR ART

Site investigation has always been an important part of environmental protection engineering, factory location evaluation and potential pollution analysis, especially when the environment is on potential exposure to pollution everywhere nowadays. Therefore, it is necessary to conduct site investigations regularly in order to monitor environmental conditions. For example, as factory is a source with high probability of discharging hazardous substances, it is necessary to conduct site investigations to monitor the surrounding soil and groundwater, regardless of whether it is still in operation or has been abandoned, in order to understand the possibility of contamination caused by the working/abandoned factory. Moreover, when the land usage is in transition (for example, changing from factory to house or leisure centre) or even in the change of factory type, whether the surroundings of the abandoned factory is suitable to be used again can be evaluated by the information obtained from site investigation. Besides, the information obtained from site investigation can also be used to monitor the risks of nearby residents' health damage due to exposure to pollution.

However, site investigation is not an easy task. Traditionally, lots of prior preparations are required before a site investigation, for example, the latest aerial images, historical aerial images, sampling record, regional data and so on are required to be prepared in order to understand the surrounding situation. In addition, it is considered to be very inconvenient since lots of paper work and photos have to be processed during the site investigation and organization thereof afterward is needed. Moreover, the evaluation time required after a site investigation tends to be time consuming as the information obtained from the site investigation cannot be forwarded immediately for further analysis and pollution evaluation. It also reduces efficiency because of the information cannot be shared timely.

### SUMMARY OF THE INVENTION

In view of the above problems associated with prior art technology, an object of the present invention is to provide a mobile device for site investigation in real time interaction which enables site investigators to obtain information of the target being investigated immediately without complex prior preparation. In addition, the mobile device can easily and rapidly record/review the information obtained of the designated area. Moreover, it can also transmit the data quickly after recording to the server for further location evaluation and potential pollution analysis/management.

According to the object of the present invention, there is provided a mobile device for site investigation in real time interaction comprising: a digital map display module, a remote data access module, a digital map marking module, a data input module and GPS positioning module. The digital map display module displays a digital map on a monitor of the mobile device; the remote data access module downloads a vicinity data of a surveyed site from a remote server; the digital map marking module marks a coverage region or a sampling distribution record based on the vicinity data; and the data input module displays an editing interface on the monitor of the mobile device for editing the coverage region or the sampling distribution record on the digital map by a user; wherein the remote data access module uploads the edited coverage region or sampling distribution record to the remote server.

According to the aforementioned object, wherein the remote data access module sends the location of mobile device to the remote server via Internet, then receives the vicinity data returned by the remote server via Internet.

According to the aforementioned object, wherein the remote data access module provides a real time location of the mobile device to the remote server, wherein the real time location is detected by the GPS positioning module.

According to the aforementioned object, the mobile device further comprises a first query interface, the first query interface is triggered by clicking the coverage region on the digital map and the detailed information regarding the coverage region which has been clicked will be shown.

According to the aforementioned object, the mobile device further comprises an editing interface, the editing interface is triggered by clicking the coverage region on the digital map and the user can edit the detail information regarding clicked coverage region or scope on the editing interface.

According to the aforementioned object, wherein the coverage region regards the scopes of an abandoned factory; the sampling distribution record comprises a sampling number.

According to the aforementioned object, based on different samples, the digital map marking module uses different colors to mark the sampling distribution records on the digital map.

According to the aforementioned object, the mobile device further comprises a second query interface, the second query interface is triggered by clicking the sampling distribution record on the digital map and the detailed information regarding the sampling distribution record will be shown.

According to the aforementioned object, the digital map displayed by the digital map marking module is a schematic road diagram, a latest aerial image or a previous aerial image.

According to the aforementioned object, the remote data access module synchronizes a batch of data to the remote server automatically and regularly, and will suspend or restart the synchronization process based on network connection status.

According to an object of the present invention, there is provided a method implemented in a mobile device for site investigation in real time interaction comprising: downloading a vicinity data of a surveyed site from a remote server; displaying a digital map on a monitor of the mobile device; marking a coverage region or a sampling distribution record on the digital map based on the vicinity data; and displaying an editing interface on the monitor of the mobile device for user to edit the coverage region or the sampling distribution record of the digital map; uploading the edited coverage region or sampling distribution record to the remote server.

According to the aforementioned object, the method further comprises the following steps: sending the location of mobile device to the remote server via Internet, then receiving the vicinity data returned by the remote server via Internet.

According to the aforementioned object, the method further comprises the following steps: detecting a real time location of the mobile device by using GPS positioning and providing the real time location to the remote server

According to the aforementioned object, the method further comprises the following steps: clicking the coverage region on the digital map to show the detailed information regarding the coverage region which has been clicked.

According to the aforementioned object, the method further comprises the following steps: clicking the coverage region of the digital map to edit the detailed information regarding clicked coverage region or scope.

According to the aforementioned object, the method further comprises the following steps: based on different samples, marking the sampling distribution record on the digital map by different colors.

According to the aforementioned object, the method further comprises the following steps: clicking the sampling distribution record on the digital map to show the detailed information regarding the sampling distribution record.

According to the aforementioned object, the method further comprises the following steps: synchronizing a batch of data to the remote server automatically and regularly; suspending the synchronization whenever Internet disconnection is encountered and restoring the synchronization after Internet connection is restored.

Therefore, the aforesaid mobile device and method of the present invention has the following advantages: The latest information regarding the area and the historical sampling record can be transmitted to the site rapidly for survey. The latest sampling record can be entered quickly and easily when conducting the survey. The information regarding the surveyed area can be modified based on the site conditions. The data and record obtained from the survey can be transmitted to the remote server quickly for further location evaluation and potential pollution analysis.

### BRIEF DESCRIPTION OF THE DRAWINGS

Fig. 1 is an architecture diagram regarding the mobile device for site investigation of an embodiment of the present invention.
Fig. 2A is a flow chart regarding site investigation method of an embodiment of the present invention.
Fig. 2B is a flow chart regarding site investigation method of another embodiment of the present invention.
Fig. 3 is a screenshot of the mobile device, which illustrates that the mobile device will be showed on the digital map by using GPS.
Fig. 4 is a screenshot of the mobile device, which illustrates an interface to accept manual inputs.
Fig. 5 is a screenshot of the mobile device, which illustrates marking coverage region on the digital map.
Fig. 6 is a screenshot of the mobile device, which illustrates marking sampling distribution record on the digital map.
Fig. 7 is a screenshot of the mobile device, which illustrates showing the detailed information on the digital map.
Fig. 8 is a screenshots of the mobile device, which illustrates the listed result of detailed information.
Fig. 9 is a screenshot of the mobile device, which illustrates the classification of the sampling information.
Fig. 10 is a screenshots of the mobile device, which illustrates an input interface for soil sampling information.
Fig. 11 is a screenshot of the mobile device, which illustrates another input interface for soil sampling information.

### DETAILED DESCRIPTION OF THE PREFERRED EMBODIMENTS

The present invention now will be described more fully hereinafter with reference to the accompanying drawings, in which preferred embodiments of the invention are shown. Numerals mentioned in the following description refer to those shown in the drawings. It should be noted that the words "comprising" or "including" used in the description shall be interpreted as open-ended terms with the meaning of "including but not limited to." Moreover, those of ordinary skill in the art should understand that, there may be different designations for the same component/product; for example, a "digital map" and an "electronic map" or a "mobile device" and a "portable device" may refer to the same component/product. Therefore, components/products that are of the same technical field and similar to those mentioned in the following description should also be included in the scope of the present application.

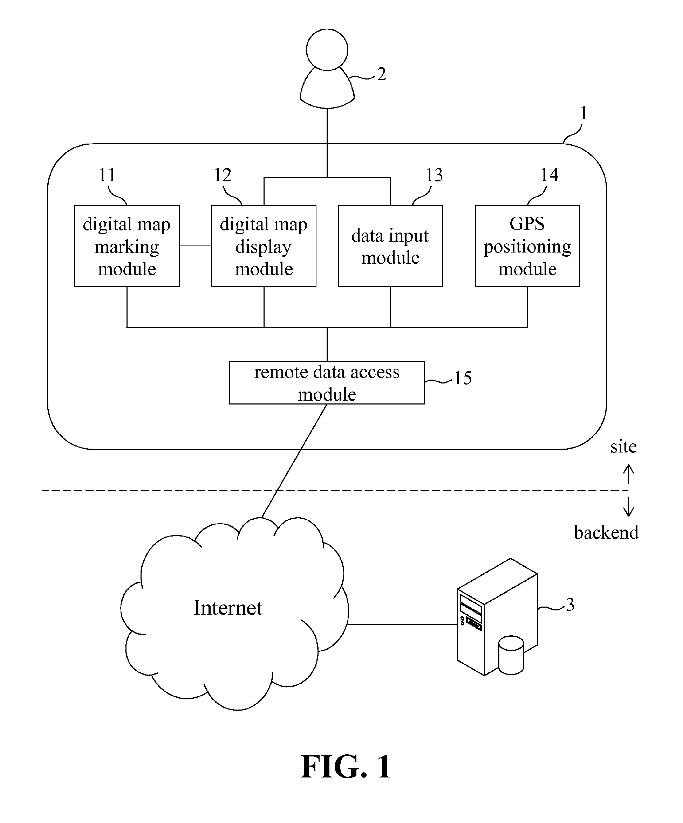

Fig. 1 is an architecture diagram of a mobile device 1 of an embodiment. As Fig. 1 shows, the mobile device 1 comprises a digital map marking module 11, a digital map display module 12, data input module 13, GPS positioning module 14 and a remote data access module 15. The digital map display module 12 displays a digital map on the screen of the mobile device 1, such that a user 2 can quickly and easily obtain map information which is required for site investigation. The digital map is obtained from a remote server 3 via the remote data access module 15, or is saved in the storage device of the mobile device 1. The data input module 13 displays an edit interface on the screen of the mobile device 1, such that the user 2 can edit a coverage region or a sampling distribution record on any place of the digital map. GPS positioning module 14 detects real time geographic information of the mobile device 1, and provides the real time geographic information to the remote data access module 15. The remote data access module 15 then provides the real time geographic information to the remote server 3. The remote data access module 15 processes the upload/download/synchronization tasks between the mobile device 1 and the remote server 3 via Internet as a communication channel. The digital map marking module 11 marks a coverage region or a sampling distribution record on the digital map based on the information provided by the remote server 3.

Those of ordinary skill in the art should understand that the mobile device 1 of the present invention can be chosen from portable devices which has rich graphical interface and are able to access Internet or mobile network, such as smartphone, tablet PC, notebook or PDA. The data stored in the storage device of mobile device 1 is machine readable. The storage device comprises volatile memory and non-volatile media and removable and non-removable media, which comprise but not limited to random access memory, read-only memory, erasable and programmable read-only memory, erasable and programmable read-only electronic memory, flash memory, solid-state memory, compact disc, optical storage, magnetic cartridge, magnetic tape, magnetic storage device, mass storage device, or any other media which can store required information and be accessed by computer.

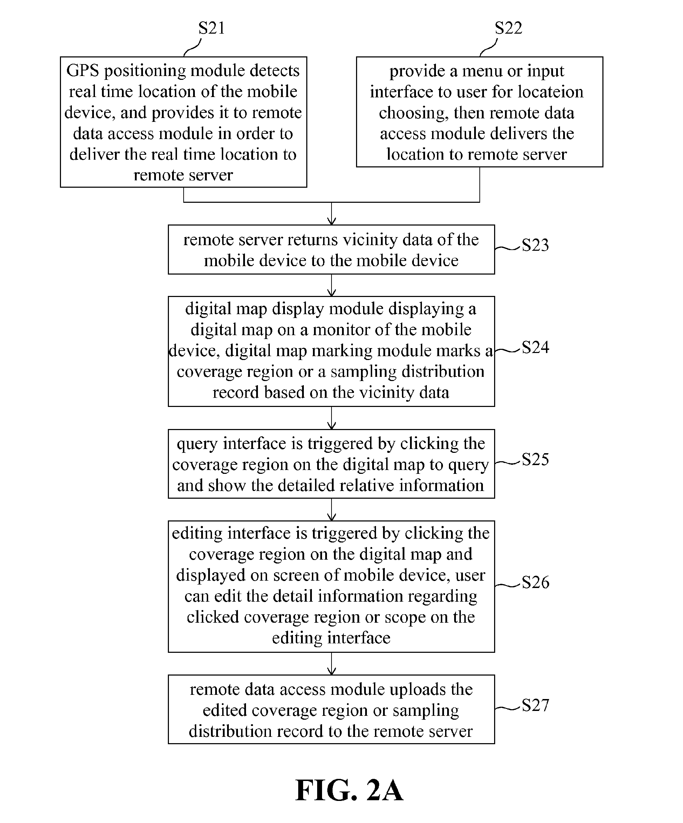

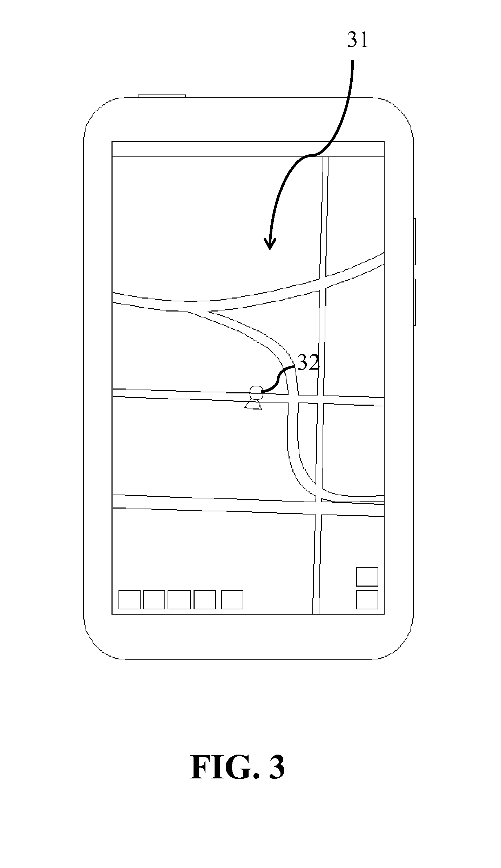

Fig. 2A is a flow chart of the site investigation method of an embodiment of the present invention. The site investigation method of the present invention is implemented by the mobile device shown in Fig. 1. Fig. 3 to Fig. 11 shows the screen of the mobile device corresponding to each step.

As shown in step S21 of Fig. 2A, wherein some of the components' numbers please refer to Fig. 1, the GPS positioning module 14 will be activated at first when the user 2 is processing site investigation. The GPS positioning module 14 is operating to detect real-time geographic information of the mobile device 1, and provides the real-time geographic information to the remote data access module 15. The remote data access module 15 will then deliver the real-time geographic information to the remote server 3. In order to allow the user 2 to confirm whether the position of the real-time geographic information is correct, the GPS positioning module 14 will preferably provide the real-time geographic information to the digital map display module 12. The digital map display module 12 will then show this real-time geographic information on the screen of the mobile device 1 as shown in Fig. 3. Furthermore, Fig.3 shows that digital map 31 is shown on the screen of the mobile device 1, wherein the position of the mobile device 1 will be marked on the digital map 31 in real time. The digital map 31 displayed by digital map display module 12 is a schematic road diagram, a latest aerial image or a previous aerial image.

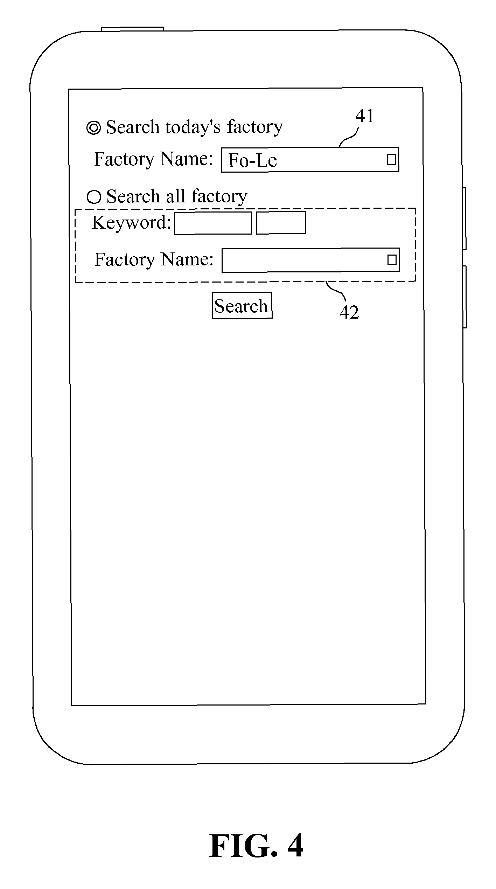

As shown in step S22 of Fig. 2A, whenever mobile device 1 is in a weak signal reception area and the GPS positioning module 14 cannot operate normally, current position of the mobile device 1 can be entered manually on the screen of the mobile device 1 as shown in Fig. 4. Furthermore, Fig.4 shows that the user can choose a location from menu 41 or input interface 42 provided by the mobile device 1. After choosing or entering, the remote data access module 15 provides the location data to the remote server 3, wherein the input interface 42 is preferably working based on keyword searching and drop-down menu picking.

As shown in step S23 of Fig. 2A, once the location data of the mobile device 1 has been received, the remote server 3 will provide a vicinity data of the surveyed site to the remote data access module 15 of the mobile device 1, wherein the vicinity data comprises various kind of vicinity area's regional (i.e. range of abandoned factory, border of special geology and so on) and sampling information in detail.

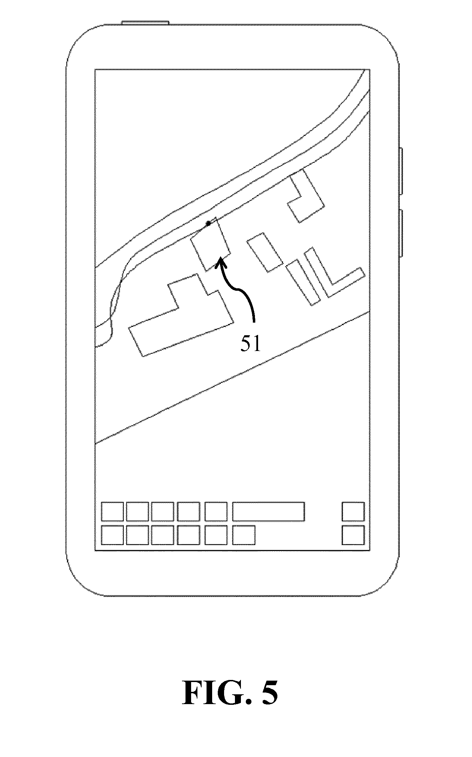

As shown in step S24 of Fig. 2A, the remote data access module 15 will provide the vicinity data to the digital map marking module 11 and the digital map display module 12. The digital map marking module 11 marks the geographical coverage on the digital map based on the vicinity data, wherein the aforesaid geographical coverage, for example, can be the border of factory, coverage of abandoned factory, border of buildings, or boundary line of special geology. The digital map display module 12 shows the marked digital map on the screen of the mobile device as shown in Fig. 5. Furthermore, Fig. 5 shows that geographic mark 51 indicates the range of the plant and the actual size of the buildings thereof, such that the worker can easily and quickly get information of the vicinity data without lots of paper work preparation before the site investigation. All the investigators need is a mobile device which has installed the system of present invention, which means that the time and cost can be greatly saved and the correctness can be improved.

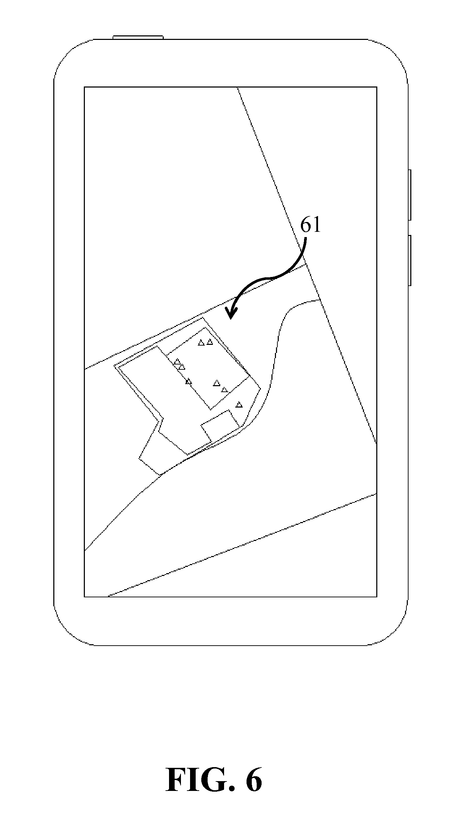

Besides marking the coverage region, the digital map marking module 11 also can mark the sampling distribution record based on the vicinity data. As shown in Fig. 6, the digital map marking module 11 marks sampling mark 61 on the digital map with different colors in accordance with different samples. In the sampling mark 61, for example, green means sample of soil, blue means sample of groundwater and brown means sample of waste. In one embodiment, numbers are tagged to each sampling mark 61 on the digital map. As a result, the investigators of site investigation can get the sampled record easily and quickly, such that the process of the site investigation can be accelerated. However, those of ordinary skill in the art should understand that without departing from the spirit and scope of this invention, the geographic mark 51 and the sampling mark 61 can be applied to any other survey operations, for example, geological survey, water quality survey, factory location evaluation, potential pollution analysis and so on.

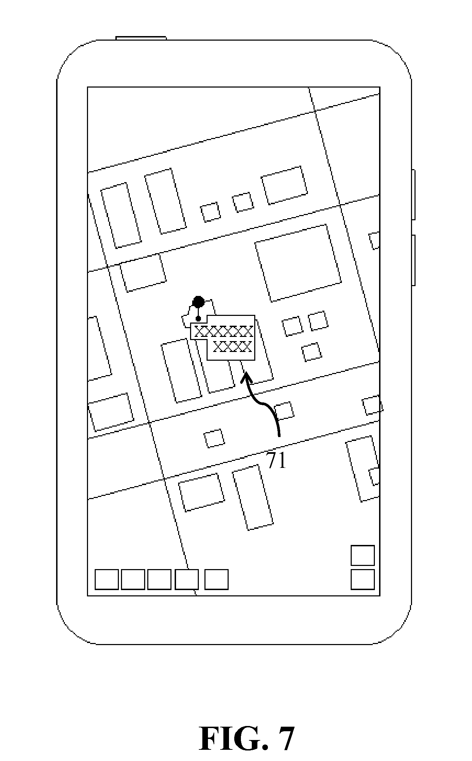

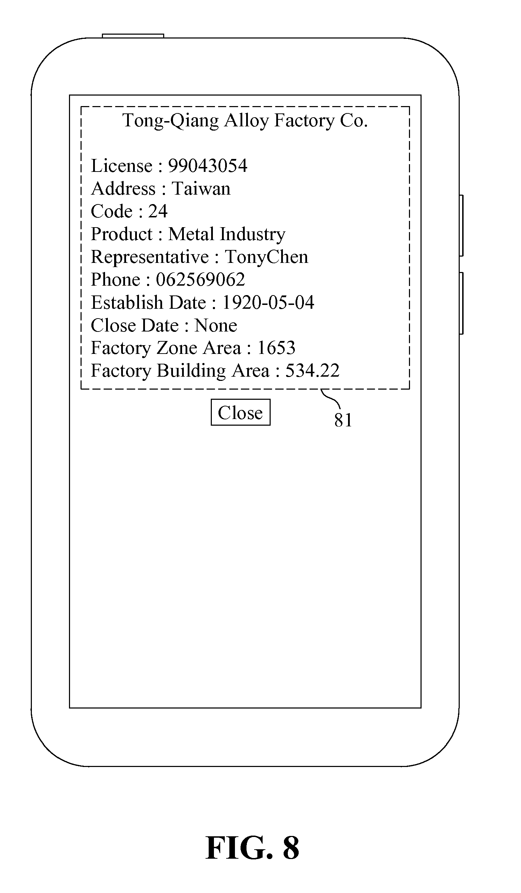

As shown in step S25 of Fig. 2A, a query interface can be triggered by clicking the coverage region or a sampling distribution record shown on the digital map in order to enquire details, for example, information on the geographical details regarding the selected coverage region or information of sample details regarding the sampling distribution record. In other words, after clicking the geographic mark 51 as shown in Fig. 5 or the sampling mark 61 as shown in Fig. 6, the query interface will be triggered. The query interface will receive and show geographical details information 71 on the digital map as shown in Fig. 7, or show the query results in the detail information display area 81 as shown in Fig. 8. In one embodiment, the aforesaid geographical detailed information or sampling detailed information can be obtained by requesting the remote server 3 from the remote data access module 15, and then the remote server 3 will return this information to the remote data access module 15.

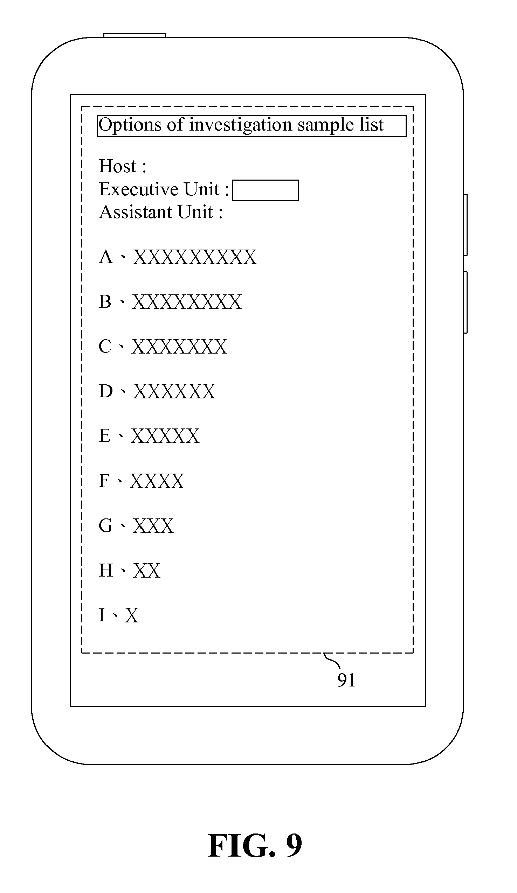

As shown in step S26 of Fig. 2A , the data input module 13 can be triggered by clicking the digital map and an edit interface will be shown on the screen of mobile device 1, such that the user can edit the coverage region or the sampling distribution record shown on any location of the digital map. For example, boundary line or geographical detailed information of the geographic mark 51 can be modified by clicking the geographic mark 51 as shown in Fig. 5. The data input module 13 can also be triggered by clicking the sampling mark 61 and an edit interface 91 will be displayed as shown in Fig. 9. Some detailed information and process records can be set via the edit interface 91, for example, collaborative investigators, control data of investigators, control data of surveyed equipment, sampling record of soil, sampling record of groundwater, sampling record of waste, basic information of monitoring wells, other matters, confirmation forms, etc.

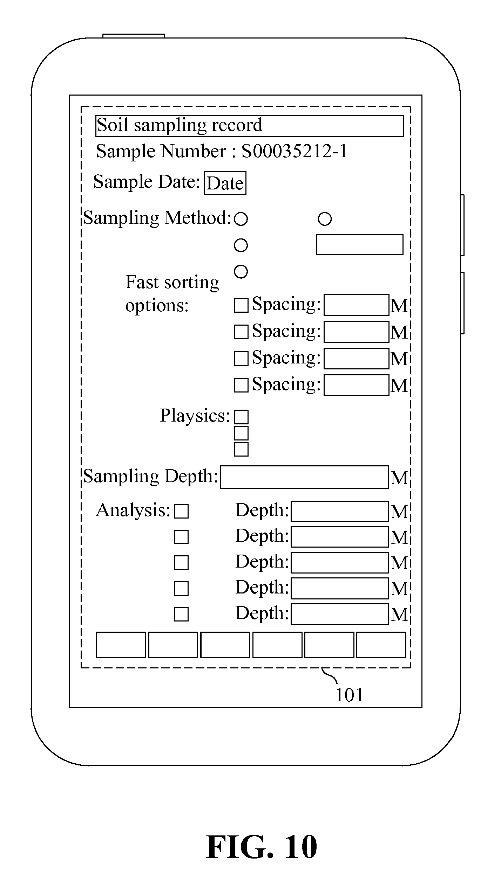

Furthermore, more detailed information can be set by clicking edit interface 91. For example, soil sampling edit interface 101 will appear after clicking the sampling record of soil shown in edit interface 91 as shown in Fig. 10. Sampling details such as date, method, rapid screening item, sampling depth, analysis item, etc. can be set in the soil sampling edit interface 101.

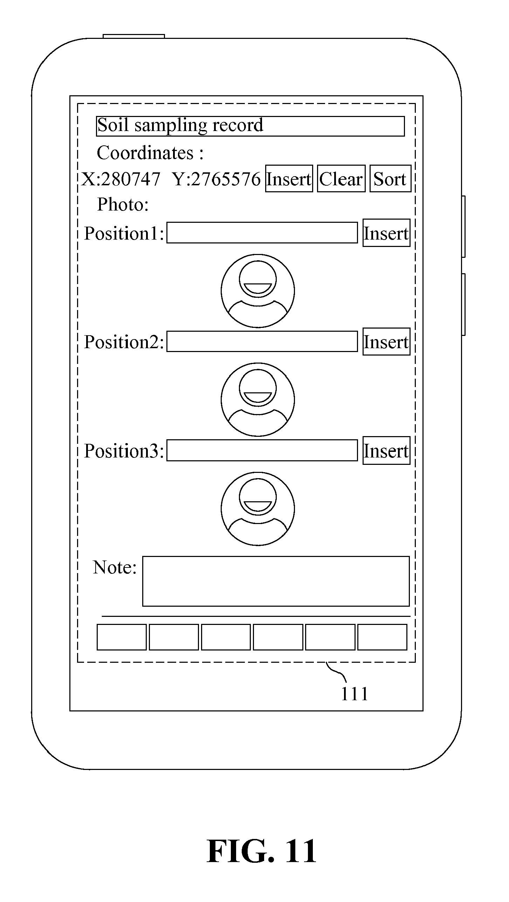

Location of the site investigation can be set by GPS positioning obtained from the GPS positioning module 14 as shown in soil sampling editing interface 111 of Fig. 11. The mobile device can use built-in photographic unit to record the site investigation by filming. After editing, the data input module 13 provides the edited coverage region or the sampling distribution record to the remote data access module 15.

Several kinds of tap or click actions against the coverage region or the sampling distribution record on the digital map can be use to distinguish whether to trigger query interface or the data input module 13, for example, single click, double click or drag. In one embodiment, it is needed to choose whether to query information or input data at first, then practice the tap or click actions against the coverage region or the sampling distribution record on the digital map to distinguish whether to trigger query interface or the data input module 13.

As shown in step S27 of Fig. 2A, the remote data access module 15 uploads the edited coverage region or a sampling distribution record to the remote server 3. In one embodiment, the remote data access module 15 automatically and periodically implements a batch of synchronization to the remote server 3, and will suspend or restart the synchronization process based on network connection status, i.e. suspends the synchronization process whenever poor network connection is occurred and resumes the synchronization process when the network connection is recovered.

There is another embodiment of the present invention to overcome the issue of poor internet connection of the site investigation area or the site investigation area is not covered by wireless network or mobile network, which makes it difficult to download the vicinity data to the mobile device via Internet.

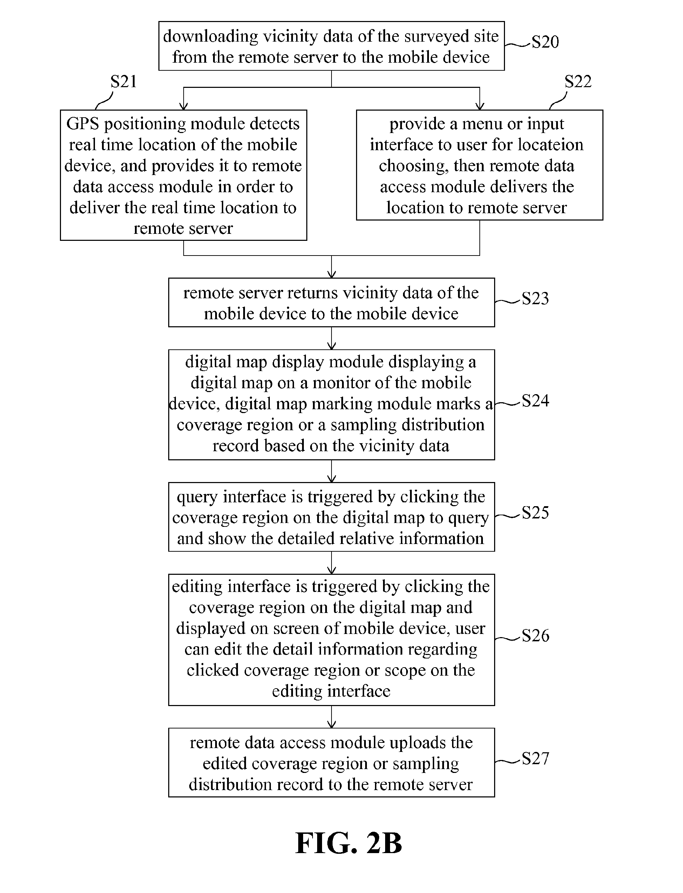

Fig. 2B is a flow chart of another embodiment of the present invention. As shown in step S20 of the Fig. 2B, the vicinity data was downloaded to the mobile device before the investigators start the investigation. The download can be implemented by cable connection, i.e. USB cable, RS232 cable, SATA cable or any other connection cable, either by wired/wireless LAN, infrared connection, and blue tooth connection/ near field communication (NFC) connection/ radio-frequency identification (RFID) connection. Such that the site investigation will not be affected by poor network connection or no network signal situation. The remaining steps of Fig. 2B, which are steps S21-S27, are the same as the aforesaid embodiments, and will not repeat thereafter. It should be noticed that step 24 should ne followed by step S21 or S22.

According to the process mentioned above, the mobile device for site investigation in real time interaction of present invention lets site investigators to obtain the information of the target being investigated immediately by using the mobile device without complex prior preparation. In addition, the mobile device can easily and rapidly record/review detailed information and relative sampling record of the designated area. Moreover, it can also transmit the data quickly after recording to the server for further location evaluation and potential pollution analysis/management. Accordingly, the present invention can simplify and accelerate the process of the site investigation, such that the efficiency of site investigation can be improved.

The embodiments depicted above and the appended drawings are exemplary and are not intended to limit the scope of the present invention. All modifications or alterations that have equivalent functions and are made without departing from the spirit and scope of the present invention fall within the scope of the appended claims.

## Claims

1. A mobile device for site investigation in real time interaction comprising:
a digital map display module, configured for displaying a digital map on a monitor of the mobile device;
a remote data access module, configured for downloading a vicinity data of a surveyed site from a remote server;
a digital map marking module, configured for marking a coverage region or a sampling distribution record based on the vicinity data; and
a data input module, configured for displaying an editing interface on the monitor of the mobile device for editing the coverage region or the sampling distribution record on the digital map by a user,
wherein the remote data access module uploads the edited coverage region or sampling distribution record to the remote server.

2. The mobile device according to claim 1, wherein the remote data access module transmits the location of mobile device to the remote server via Internet, and then receives the vicinity data back from the remote server via Internet.

3. The mobile device according to claim 1, further comprising a GPS positioning module, wherein the remote data access module provides a real time location of the mobile device to the remote server, wherein the real time location is detected by the GPS positioning module.

4. The mobile device according to claim 1, further comprising a first query interface, which is triggered by clicking the coverage region on the digital map, such that the detailed information regarding the coverage region is shown.

5. The mobile device according to claim 1, further comprising an editing interface, which is triggered by clicking the coverage region on the digital map and enables the user to edit the detail information regarding clicked coverage region or scope on the editing interface.

6. The mobile device according to claim 1, wherein the coverage region is an abandoned factory.

7. The mobile device according to claim 1, wherein the sampling distribution record comprises a sampling number.

8. The mobile device according to claim 1, wherein, based on different samples, the digital map marking module uses different colors to mark the sampling distribution records on the digital map.

9. The mobile device according to claim 1, further comprising a second query interface, which is triggered by clicking the sampling distribution record on the digital map, such that the detailed information regarding the sampling distribution record is shown.

10. The mobile device according to claim 1, wherein the digital map displayed by the digital map marking module is a schematic road diagram, a latest aerial image or a previous aerial image.

11. The mobile device according to claim 1, wherein the remote data access module synchronizes a batch of data to the remote server automatically and regularly, and suspends or restarts the synchronization process based on network connection status.

12. A method implemented in a mobile device for site investigation in real time interaction comprising:
downloading a vicinity data of a surveyed site from a remote server;
displaying a digital map on a monitor of the mobile device;
marking a coverage region or a sampling distribution record on the digital map based on the vicinity data;
displaying an editing interface on the monitor of the mobile device for user to edit the coverage region or the sampling distribution record of the digital map; and
uploading the edited coverage region or sampling distribution record to the remote server.

13. The method according to claim 12, further comprising the steps of: transmitting the location of mobile device to the remote server via Internet, and then receiving the vicinity data returned by the remote server via Internet.

14. The method according to claim 12, further comprising the steps of: detecting a real time location of the mobile device by using GPS positioning and providing the real time location to the remote server

15. The method according to claim 12, further comprising the steps of: clicking the coverage region on the digital map to show the detailed information regarding the coverage region which has been clicked.

16. The method according to claim 12, further comprising the steps of: clicking the coverage region of the digital map to edit the detailed information regarding clicked coverage region or scope.

17. The method according to claim 12, further comprising the steps of: based on different samples, marking the sampling distribution record on the digital map by different colors.

18. The method according to claim 12, further comprising the steps of: clicking the sampling distribution record on the digital map to show the detailed information regarding the sampling distribution record.

19. The method according to claim 12, further comprising the steps of: synchronizing a batch of data to the remote server automatically and regularly; and suspending the synchronization whenever Internet disconnection is encountered and restoring the synchronization after Internet connection is restored.
